Europäisches Patentamt

European Patent Office

Office européen des brevets

(11) Publication number: 0 344 318
A1

# EUROPEAN PATENT APPLICATION
published in accordance with Art. 158(3) EPC

(21) Application number: 88908341.6

(22) Date of filing: 19.09.88

Data of the international application taken as a basis:

(86) International application number:
PCT/JP88/00950

(87) International publication number:
WO89/05367 (15.06.89 89/13)

(51) Int. Cl.³: **D 04 H 3/14**
**D 04 H 3/04, B 32 B 5/08**
**B 32 B 27/04**

(30) Priority: 30.11.87 JP 303997/87
30.11.87 JP 303998/87

(43) Date of publication of application:
06.12.89 Bulletin 89/49

(84) Designated Contracting States:
AT BE CH DE FR GB IT LI LU NL SE

(71) Applicant: HAGIHARA INDUSTRIES, INC.
1-4 Nakadori, Mizushima, Kurashiki-shi
Okayama 712(JP)

(72) Inventor: YABUKI, Masuo Hagihara Industries, Inc.
1-4 Nakadori Mizushima Kurashiki-shi
Okayama 712(JP)

(74) Representative: Strehl, Schübel-Hopf, Groening, Schulz
Maximilianstrasse 54 Postfach 22 14 55
D-8000 München 22(DE)

(54) NONWOVEN FABRIC AND APPARATUS FOR MANUFACTURING SAME.

(57) This invention relates to nonwoven fabric consisting of a combination of a plurality of wefts and warps, nonwoven fabric consisting of a combination of threads with films, and an apparatus for manufacturing such nonwoven cloths. In order to obtain nonwoven fabric having a high bonding strength of wefts and warps and a thread and a film, a high mechanical strength and a high durability, a thread consisting of a stratified structure composed of at least two kinds of resin of different melting points and having a surface layer of a synthetic resin the melting point of which is lower than that of a substrate resin is used. Threads of such a stratified structure are arranged crosswise as wefts and warps, or threads of the same structure and films of a synthetic resin are laminated. The product is subjected to thermal press-fixing at a temperature in the range from a level higher than the melting point of the surface layer-forming resin to a level lower than the melting point of the substrate resin, whereby the wefts and warps or the threads and films are combined unitarily by the fusion of the surface layer-forming resin. In the nonwoven fabric manufacturing apparatus according to the present invention, threads each of which has a stratified structure are fed as wefts in a zigzag direction over a pair of thread support members, and threads constituting warps, or films used instead of the warps are laminated on the lower surfaces of the wefts during the weft feeding operation so that the warps extend across the wefts, the product being subjected to press-fixing by heating the same to a predetermined temperature to obtain the above-mentioned nonwoven fabric. Especially, the two thread support members for feeding the wefts extend to a press-fixing unit, so that the above-mentioned nonwoven fabric can be manufactured without causing the wefts to be slackened or bent and the eyes among the wefts and warps to be deformed.

F I G. 2

Specification


Non-Woven Fabric and Manufacturing Apparatus thereof


[Field of the Art]

The present invention relates to a generally net-like non-woven fabric in which a plurality of yarns serving as weft and warp yarns are arranged in an intersecting manner and bonded together at the intersecting points thereof, and to a sheet-like non-woven fabric in which a layer of a plurality of yarns serving as weft or warp yarns arranged in one direction and a synthetic resin film(s) are arranged in lamination and bonded together. Further, the present invention relates to apparatus for manufacturing such non-woven fabrics.


[Background of the Invention]

Net-like non-woven fabrics in which weft and warp yarns are bonded together, are widely used in a variety of fields as reinforcing layers for paper, synthetic resin films, fiber laminates or other sheet-like materials or the like, or as reinforcing materials for construction materials such as floor tile backing members, or as screens.

As disclosed by, for example, the Japanese Laid-

0344318

Open Publication No. 58-104255, such a conventional non-woven fabric generally includes at least two layers in each of which a plurality of normal multi-filament yarns serving as weft or warp yarns are arranged in parallel with one another, the weft yarns intersecting the warp yarns. The weft-yarn layer and the warp-yarn layer are bonded together at the intersecting points thereof with adhesive resin or the like.

As shown in the Publication above-mentioned, such fabrics are made in the manner outlined below.

The weft yarns laid over and fed by a pair of yarn supports are immersed in an adhesive solution, after which warp yarns are overlapped on the weft yarns. The weft and warp yarns are then heated and dried. Alternately, the weft yarns on which the warp yarns are previously overlapped, are immersed in an adhesive solution, and then heated and dried. After such immersion, the weft yarns are separated from the yarn supports, creating problems of slackness, distortion, bowing or the like of the weft yarns. Even though the weft and warp yarns separated from the yarn supports are held, from above and under, by belts, the yarn slackness cannot be avoided.

In the non-woven fabrics made in the manner above-mentioned, the strength of bonding the weft and warp yarns together with an adhesive is not sufficient, creating the problem that the weft and warp yarns are apt to separate from each other.

In view of the foregoing, there has been proposed a non-woven fabric in which mono-filament yarns or tape-like yarns made of thermoplastic resin are used as weft and warp yarns, and thermally compressed such that the weft and warp yarns are efficiently molten and bonded together. In this case, if the yarns made of only one type of synthetic resin are used, there is a likelihood that, when heated and compressed, the yarns are lowered in orientation effect or strength due to their softening and melting, or the yarns are bowed due to their shrinking deformation.

Further, such a non-woven fabric has a net-like structure by the weft and warp yarns. This imposes restrictions on the scope of application. In this connection, a film-like member made of synthetic resin may be used in place of either weft or warp yarns. The yarns and the film-like member are heated and compressed, causing the same to be molten and bonded togethe. This forms a non-woven fabric in which the film-like member is combined with the yarns. In this case too, if the film-like member and the yarns are made of only one type of synthetic resin, there is a likelihood that, when heated and compressed, the yarns and the film are decreased in orientation effect or strength or are shrinkingly deformed due to their softening and melting.

It is an object of the present invention to provide a net-like non-woven fabric including weft and warp yarns bonded together, in which the weft and warp yarns are bonded together securely and rigidly by thermal compression with the strength inherent in the yarns sufficiently maintained, whereby the non-woven fabric is excellent in resistance to peeling and durability.

It is another object of the present invention to provide a sheet-like non-woven fabric including, in combination, yarns arranged in at least one direction of the weft and warp directions and a film-like member(s) made of synthetic resin, in which the yarns and the film-like member(s) are bonded together securely and rigidly by thermal compression with the strength inherent in the yarns sufficiently maintained, whereby the non-woven fabric is excellent in resistance to peeling and durability.

It is a further object of the present invention to provide apparatus capable of manufacturing the non-woven fabrics above-mentioned securely and efficiently with no yarn bowing produced.

0344318

[Disclosure of the Invention]

To achieve the object above-mentioned, the non-woven fabric including weft and warp yarns bonded together in accordance with the present invention, includes at least two layers in each of which a plurality of composite-layer yarns are arranged, as weft or warp yarns, in parallel with one another, the weft yarns intersecting the warp yarns. The yarns are made of at least two types of synthetic resins having different melting points, and each yarn includes a base member made of the synthetic resin having a higher melting point and a surface layer made of the synthetic resin having a lower melting point. The yarns thus arranged are thermally compressed at a temperature in a range higher than the melting point of the surface-layer resin and lower than the melting point of the base-member resin. The weft and warp yarns are bonded together at the intersecting points thereof.

In such a non-woven fabric, the surface layers made of the synthetic resin having a melting point lower than that of the base-member resin are softened and molten by thermal compression. Accordingly, the weft and warp yarns are bonded together securely and rigidly at the intersecting points thereof. Thus, there is no possibility of the weft and warp yarns easily separating from each other. Further, the thermal compression is carried out at a temperature in a range higher than the melting point of the surface-layer resin and lower than the melting point of the base-member resin. This does not cause the base-member resin to be softened and molten, thereby not to lose the mechanical strength, such as tensile strength, of the yarns. Thus, the non-woven fabric may be provided with practical strength required for a non-woven fabric of this type.

To achieve the another object above-mentioned, the non-woven fabric including yarns and a film-like member(s) in accordance with the present invention, includes:

a plurality of composite-layer yarns arranged substantially in parallel with one another in one direction, each yarn including (a) a base member made of synthetic resin having a relatively high melting point, and (b) a surface layer made of synthetic resin having a melting point lower than that of the base-member resin; and

a film-like member made of synthetic resin disposed on at least one side of the yarns.

The yarns and the film-like member thus arranged are thermally compressed at a temperature in a range higher than the melting point of the surface-layer resin of the yarns and lower than the melting point of the base-member resin. The yarns and the film-like member are then bonded together.

In such a non-woven fabric, the surface layers of the yarns arranged in one direction which are made of the synthetic resin having a melting point lower than that of the base-member resin, are softened and molten by thermal compression. Accordingly, the yarns and the film-like member are securely and rigidly bonded together at the opposite sides thereof. Thus, there is no possibility of the yarns easily separating from the film-like member. Further, the thermal compression is carried out at a temperature in a range higher than the melting point of the surface-layer resin and lower than the melting point of the base-member resin. This does not cause the base-member resin of the yarns to be softened and molten, thereby not to lose the mechanical strength, such as tensile strength, of the yarns. This securely achieves reinforcement by the yarns in a good manner. This also prevents the film-like member from being stretched or damaged. Thus, the non-woven fabric may be provided with strength required for a non-woven fabric serving as a sheet.

When a uniaxially oriented film is used as the film-like member and arranged such that the orientation direction thereof intersects the yarns, the tensile strength and the resistance to tear of the non-woven fabric may be assured both in the orientation direction of the film-like member by the orientation effect thereof and in the direction intersecting the film orientation direction by the reinforcement effect of the yarns.

There may be used, as the film-like member, a uniaxially oriented multi-layer film including a base layer made of synthetic resin having a relatively high melting point and a surface layer made of synthetic resin having a melting point lower than that of the base-layer resin, the surface layer being disposed on at least one side of the base layer. When such film is disposed such that the surface-layer resin is opposite to the yarns, the surface-layer resin of the film-like member and the surface-layer resin of the yarns are molten and bonded together by the thermal compression. This further enhances the bonding strength.

According to the present invention, either or both of multi-layer tape-like yarns and composite mono-filament yarns are used as composite-layer yarns. In particular, when only the tape-like yarns are used, the resultant non-woven fabric may be reduced in thickness. When the composite mono-filament yarns are used, the yarn spatial intervals may be increased without reduction in mechanical strength of the yarns.

To achieve the further object above-mentioned, the apparatus in accordance with the present invention comprises:

a pair of yarn supports disposed at both sides of the apparatus with a space provided therebetween for supporting and continuously feeding a yarn as laid over and between the yarn supports such that the yarn portions laid therebetween are substantially in parallel with one another;

a laying device for continuously supplying the yarn, as the weft, to the yarn supports such that the yarn portions are laid over and between the yarn supports;

an overlapping device for continuously feeding yarns having the composite layer structure above-mentioned as the warp yarns or a film-like member(s) made of synthetic resin in place of the warp yarns, above and/or under the weft yarn portions laid over and between the yarn supports, the warp yarns or the film-like member(s) intersecting the weft direction;

a heating device for heating the weft yarn portions and the warp yarns or the film-like member(s) thus overlapped, to a temperature in a range higher than the melting point of the surface-layer resin of the yarns and lower than the melting point of the base-member resin of the yarns; and

a compression device for compressing the weft yarn portions and the warp yarns or the film-like member(s) as heated, from above and under, such that the weft yarn portions are bonded to the warp yarns or the film-like member(s),

the yarn supports being extended to the positions opposite to the heating device and the compression device.

According to this manufacturing apparatus, the composite-layer yarn including the surface layer made of the synthetic resin having a melting point lower than that of the base-member resin, is supplied, as the weft, to the yarn supports such that yarn portions are laid over and between the yarn supports substantially in parallel with one another. Disposed above and/or below the weft yarn portions are a film-like member(s) or yarns serving as the warp yarns in the direction intersecting the weft direction. The weft yarn portions and the warp yarns or the film-like member(s) are heated to a temperature in a range higher than the melting point of the surface-layer resin of the yarns and lower than the melting point of the base-member resin. This causes only the surface-layer resin to be softened and molten.

While being heated, the weft yarn portions and the warp yarns or the film-like member(s) are compressed from above and under. The weft yarn portions are securely bonded to the warp yarns or the film-like member(s). Thus, the non-woven fabric may be efficiently made without exerting influences to the yarns, such as change in characteristics of the base-member thereof.

In particular, the yarn supports for supporting and feeding the yarn portions serving as the weft yarns, are extended to the positions opposite to the heating device and the compression device. This assures the production of the non-woven fabric without slackness, distortion and bowing of the weft yarn portions during their feeding.

[Brief Description of the Drawings]

Figure 1 is a perspective view of an example of a non-woven fabric in accordance with a first embodiment of the present invention in which weft and warp yarns are bonded together;

Figure 2 is an enlarged perspective view of a portion of the non-woven fabric in Figure 1;

Figure 3 and Figure 4 are schematic side and plan views, respectively, of non-woven fabric manufacturing apparatus in accordance with the present invention, illustrating the apparatus used for manufacturing the non-woven fabric in Figure 1;

Figure 5 to Figure 7 are enlarged perspective views of portions of another examples of the non-woven fabric in accordance with the first embodiment of the present invention in which weft and warp yarns are bonded together;

Figure 8 is a perspective view of an example of a non-woven fabric in accordance with a second embodiment of the present invention in which yarns are combined with film-like members;

Figure 9 is an enlarged perspective view of a portion of the non-woven fabric in Figure 8;

Figure 10 is an enlarged perspective view of a portion of another example of the non-woven fabric in accordance with the second embodiment of the present invention;

Figure 11 and Figure 12 are side and plan views, respectively, of non-woven fabric manufacturing apparatus in accordance with the present invention, illustrating the apparatus used for manufacturing the non-woven fabric in Figure 8; and

Figure 13 to Figure 15 are enlarged perspective views of portions of another examples of the non-woven fabric in accordance with the second embodiment of the present invention in which yarns are combined with a film-like member.

[Detailed Description of the Preferred Embodiments]

The following description will discuss in detail the embodiments of the present invention with reference to the attached drawings.

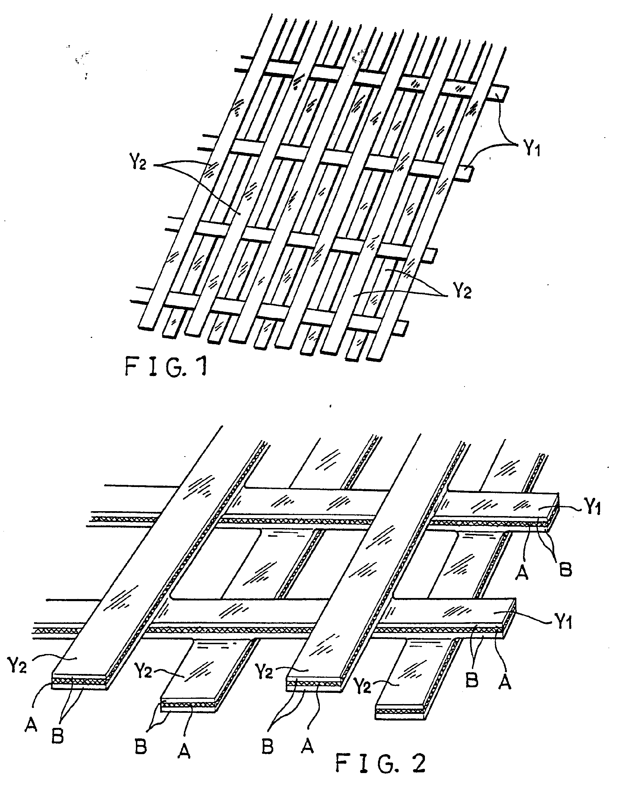

Fig. 1 and Fig. 2 show an example of a non-woven fabric in accordance with a first embodiment of the present invention in which weft and warp yarns are bonded together. In this fabric, tape-like yarns made of two types of synthetic resins A and B having different melting points are used as weft and warp yarns Y1 and Y2 each having a composite layer structure.

The tape-like yarns are flat yarns of a multi-layer structure obtained by slitting a multi-layer film into yarns each having a predetermined width, the multi-layer film comprising:

a base layer made of the synthetic resin A having a relatively high melting point; and

a surface layer or surface layers made of the synthetic resin B having a melting point lower than that of the synthetic resin A, laminated on one or both sides of the base layer.

Generally, the multi-layer film is uniaxially oriented before or after the film is slitted.

According to this example, a plurality of warp yarns Y2 are arranged above and below a plurality of parallel weft yarns Y1, and the yarns Y1 and Y2 are thermally compressed at a temperature in a range higher than the melting point of the surface-layer resin B and lower than the melting point of the base-layer resin A. This causes the weft and warp yarns Y1 and Y2 to be bonded together at the intersecting points thereof.

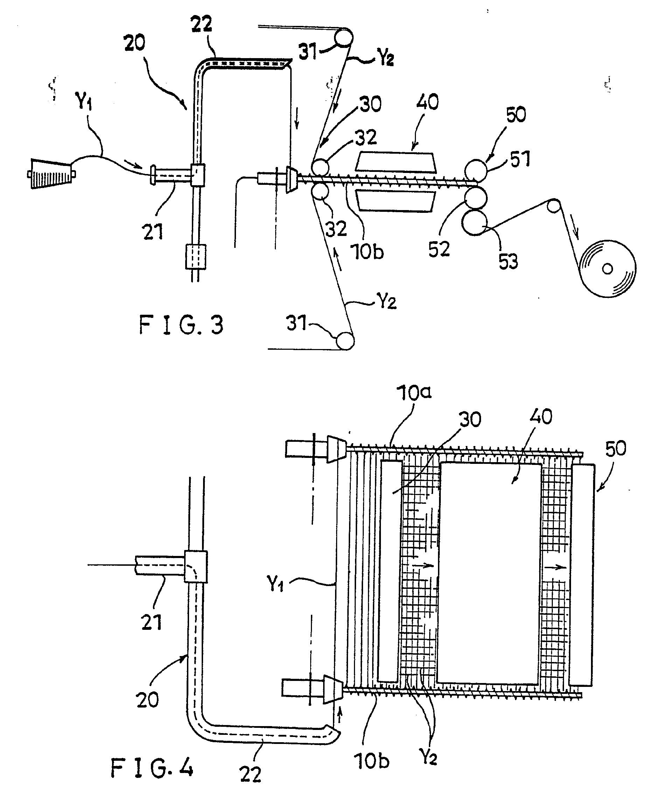

Fig. 3 and Fig. 4 show apparatus for manufacturing the non-woven fabric as shown in Fig. 1. This apparatus has the arrangement outlined below.

The apparatus is provided at the right- and left-hand sides thereof with a pair of yarn supports 10a, 10b which extend in the yarn feeding direction and between which a space is provided. The yarn supports 10a, 10b having substantially the same arrangement are provided throughout the length at the main portions thereof with spiral guide means such as spiral screws, helical springs or other equivalent means. The yarn supports 10a, 10b are adapted to support and continuously feed a weft yarn with the yarn portions laid therebetween substantially in parallel to one another. In particular, the yarn supports 10a, 10b are extended to the positions where a heating device and a compression device, to be discussed later, are disposed.

A laying device 20 is adapted to continuously feed, as the weft, the yarn Y1 of a composite layer structure made of the multi-layer tape-like yarn above-mentioned which is supplied from a bobbine, such that the yarn Y1 is continuously laid over and between the supports 10a, 10b. The laying device 20 has a hollow guide arm 22 radially extending from a hollow shaft portion 21 which is located substantially at the center of the right- and left-hand yarn supports 10a, 10b. The laying device 20 is adapted to be suitably driven and rotated around the hollow shaft portion 21 by drive means. The weft yarn is guided to the outside from the tip opening of the guide arm 22 through the hollow shaft portion 21. Then, the weft yarn is wound around and laid over and between the right- and left-hand yarn supports 10a, 10b such that the yarn portions thus laid over are spaced from one another by a predetermined distance.

In the apparatus shown in Figs. 3 and 4, one guide arm 22 is used, but the number of guide arms may be increased to enable to feed a plurality of weft yarns at the same time.

An overlapping device 30 is adapted to overlap, as warp yarns, yarns Y2 continuously supplied through guide rollers 31 from above and under the apparatus, on both sides of the weft yarn portions Yl fed as laid over and between the yarn supports 10a, 10b. The overlapping device 30 comprises a pair of warping grooved rolls 32. Thus, the warp yarns arranged in parallel with one another at predetermined spatial intervals, overlap the weft yarn portions.

A heating device 40 is provided with heater means and the like for heating both weft and warp yarns Yl and Y2 fed in an overlap manner as mentioned earlier. The heating device 40 is so arranged to heat the yarns to a temprature in a range higher than the melting point of the surface-layer resin B and lower than the melting point of the base-layer resin A, of the yarns Yl and Y2 having the composite-layer structure used in the present invention. When the weft and warp yarns Yl and Y2 are heated by this heating device 40, the surface-layer resin B is softened and molten, while the base-layer resin A having a higher melting point is neither softened nor molten.

A compression device 50 comprising a plurality of rollers 51, 52, 53 and the like is disposed downstream of the heating device 40 for compressing, from above and under, both weft and warp yarns as heated to a temperature in the range above-mentioned. By such compression, the surface-layer resins B softened and molten at the intersecting points of the weft and warp yarns Y1 and Y2, are meltingly bonded together such that yarns Y1 and Y2 are bonded together.

The heating device 40 and the compression device 50 are disposed between the yarn supports 10a, 10b extending to the positions opposite thereto. The portions of the yarn Y1 serving as weft yarns which have been laid over and between the yarn supports 10a, 10b, are adapted to be separated from the yarn supports 10a, 10b substantially at the same time of thermal compression, or after compression.

Consideration is now made on the case where a non-woven fabric is made with the multi-layer tape-like yarns as mentioned earlier, used as the weft and warp yarns Y1 and Y2.

By the rotation of the laying device 20, the tape-like yarn Y1 serving as the weft is continuously laid over and between the yarn supports 10a, 10b, and the weft yarn portions thus laid over are fed as supported in parallel at predetermined spatial intervals with the surface layers thereof turned up and down, respectively. At the same time, the tape-like yarns Y2 serving as the warp are supplied from above and under the apparatus and overlapped, as arranged in parallel with one another, above and below the yarn portions Y1 by the overlapping ap-

paratus, the yarns Y2 intersecting the yarn portions Y1. Afterwards, the yarns Y1 and Y2 are heated to a temperature in a range higher than the melting point of the surface-layer resin B of the yarns and lower than the melting point of the base-layer resin A. With only the surface-layer resin B softened and molten, the yarns are compressed by the compression device 50. This causes the surface-layer resins B of the weft and warp yarns Y1 and Y2 to be meltingly bonded at the intersecting portions thereof such that the yarns Y1 and Y2 are bonded together. There is thus obtained a non-woven fabric having a three-layer structure including one layer of yarn portions Y1 serving as the weft yarns and two layers of yarns Y2 serving as warp yarns above and below the layer of yarn portions Y1.

The width and thickness of each of the tape-like yarns used as the weft and warp yarns Y1 and Y2, and the distance between the yarns, may be freely set dependent on the application. For example, the distance between the yarn portions Y1, or the distance between the yarns Y2 may be increased to increase the opening degree of meshes. Further, the upper and lower yarns Y2 serving as the warp yarns may be arranged in a manner opposite to each other, although they are alternately arranged in Figs. 1 and 2. The upper and lower yarns Y2 may also be arranged as partially overlapping each other. In this case, the resultant fabric presents no meshes. As a plurality of yarns Y2 serving as the warp yarns, the tape-like yarns may have partially different widths or colors.

The yarns Y2 serving as the warp yarns are not limited to the three-layer tape-like yarns as shown in Fig. 2 in which the base layer is sandwiched by the surface layers of the synthetic resin B having a melting point lower than that of the base-layer resin. For example, there may be used two-layer tape-like yarns each comprising a base layer made of synthetic resin and a surface layer made of synthetic resin having a melting point lower than that of the base-layer resin, the surface layer being disposed at that side of each yarn which is opposite to and come in contact with each of the yarn portions Y1. In this case, if such yarns are narrow in width, there is a possibility of the yarns being twisted. Accordingly, there are some portions where the surface-layer resin of the two-layer yarns may not come in contact with the weft yarns. It is therefore desirable to use the three-layer tape-like yarns as shown in Fig. 2.

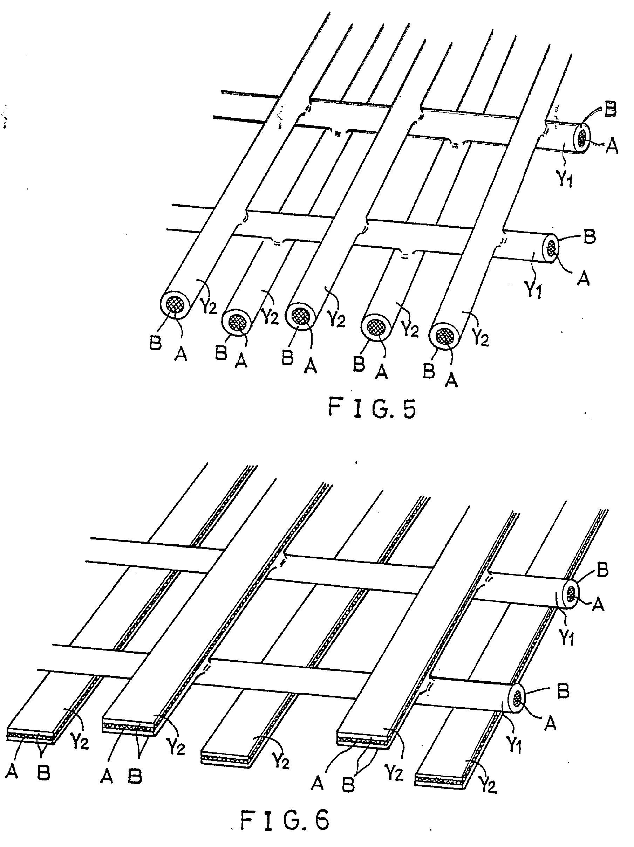

Fig. 5 shows another example of the non-woven fabric made in the same manner with the manufacturing apparatus shown in Figs. 3 and 4.

In this example, there are used composite mono-filament yarns, as the composite-layer weft and warp yarns Y1 and Y2, instead of the tape-like yarns as shown in Fig. 2. Each of the composite mono-filament yarns comprises a core member made of synthetic resin A having a relatively high melting point and a surface member made of synthetic resin B having a melting point lower than that of the core-member resin, the surface member covering the core member.

Likewise the non-woven fabric in Fig. 1, the non-woven fabric in Fig. 5 includes (i) yarns Y1 serving as the weft yarns arranged in parallel with one another, and (ii) a plurality of yarns Y2 serving as the warp yarns arranged in parallel with one another, above and below the weft yarns Y1, in the direction intersecting the weft yarns Y1. The yarns Y1 and Y2 are heated to a temperature in a range higher than the melting point of the surface-member resin B and lower than the melting point of the core-member resin A. With the surface-member resins B softened and molten, the yarns Y1 and Y2 are compressed such that the surface-layer resins B thereof are meltingly bonded together. Thus, the yarns Y1 and Y2 are bonded together at the intersecting points thereof.

The diameters of the yarns Y1 and Y2 and the between-yarn distance may be suitably set dependent on the application. Further, the yarns Y2 serving as the warp yarns may have partially different diameters or colors, or may be arranged with the between-yarn distance partially changed.

According to the present invention in which the composite mono-filament yarns are used for the yarns Y1 serving as the weft yarns, (i) the tape-like yarns may be used for both upper and lower yarns Y2 serving as the warp yarns, as shown in Fig. 6, or (ii) the tape-like yarns and the composite mono-filament yarns may be respectively used as one yarns and the other yarns of the upper and lower warp yarns, as shown in Fi.g 7.

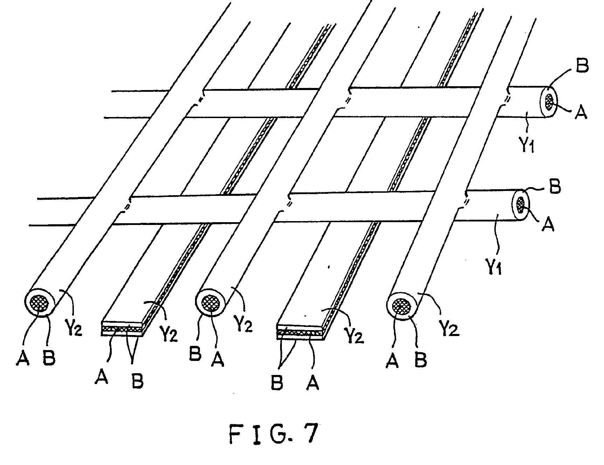

In both cases in Fig. 6 and Fig. 7, the surface resins B at the yarn intersecting points may be molten and bonded together.

According to the present invention in which the tape-like yarns are used for the yarns Y1 serving as the weft yarns, (i) the composite mono-filament yarns may be used for both upper and lower yarns Y2 serving as the warp yarns, or (ii) the tape-like yarns and the composite mono-filament yarns may be respectively used as one yarns and the other yarns of the upper and lower warp yarns.

According to the present invention, the yarns Y2 serving as the warp yarns may mixingly include the tape-like yarns and the mono-filament yarns.

In the foregoing examples, the non-woven fabric is of the three-layer structure including one layer of the weft yarns Y1 and two upper and lower layers of the warp yarns Y2 which are respectively disposed above and below the weft yarn layer. According to the present invention, however, the non-woven fabric may be made in a two-layer structure including one layer of the weft yarns Y1 and an upper or lower layer of the warp yarns Y2.

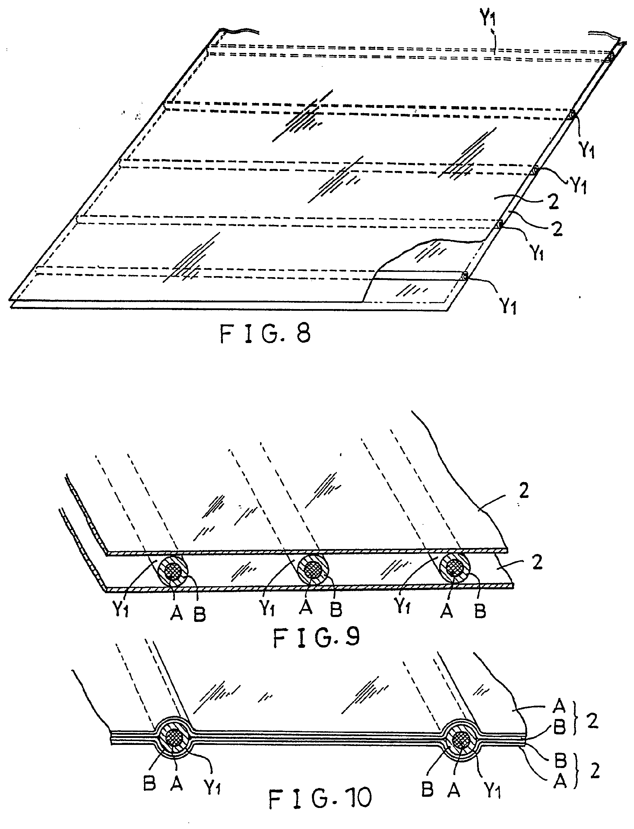

Fig. 8 and Fig. 9 show an example of a non-woven fabric in which yarns are combined with film-like members.

In this example, there are used, as the composite-layer yarns Y1, composite mono-filament yarns made of two synthetic resins A, B having different melting points. Each of the composite mono-filament yarns includes a core member made of the synthetic resin A having a relatively high melting point, and a surface member covering the core member made of the synthetic resin B having a melting point lower than that of the core-member resin A. As the film-like members 2 made of synthetic resin, there are used so-called uniaxially oriented films which have been oriented in the longi-

tudinal direction thereof.

In this example, a plurality of the composite mono-filament yarns Y1 are arranged in parallel with one another, for example, in the weft direction, and the uniaxially oriented film-like members 2 are disposed above and below the yarns Y1 such that the film orientation direction or the film longitudinal direction intersects the yarns Y1. The yarns and the film are thermally compressed at a temperature in a range higher than the melting point of the surface-member resin B and lower than the melting point of the core-member resin A. Thus, the yarns Y1 and the film-like members 2 are bonded together. In particular, the upper and lower film-like members 2 are not meltingly bonded such that the resultant non-woven fabric is made in a three-layer structure.

The non-woven fabric of this example has a proper amount of tensile strength in the orientation direction of the film-like members 2 bcause of the effect of orientation thereof. In the direction intersecting the orientation direction, this non-woven fabric is reinforced by the yarns Y1. Thus, the tensile strength and the resistance to tear are assured.

Fig. 10 shows another example of the non-woven fabric as shown in Fig. 8. In this example, there are used, as the film-like members 2, uniaxially oriented multi-layer films, each of which comprises (i) a base layer made of synthetic resin A having a relatively high melting point and (ii) a surface layer laminated on at least one side of the base layer and made of synthetic resin B having a melting point lower than the melting point of the base-layer resin. The multi-layer films are disposed such that the surface layers made of the resin B are opposite to and come in contact with the yarns Yl. The yarns and the film-like members are thermally compressed at a temperature in a range higher than the melting point of the surface-layer resin B and lower than the base-layer resin A. The surface-layer resin B of the film-like members 2 and the surface-layer resin B of the yarns Yl are then softened and molten. Thus, both layers are bonded together, thereby to further enhance the bonding strength. Further, the upper and lower film-like members 2 are entirely bonded together as shown in Fig. 10.

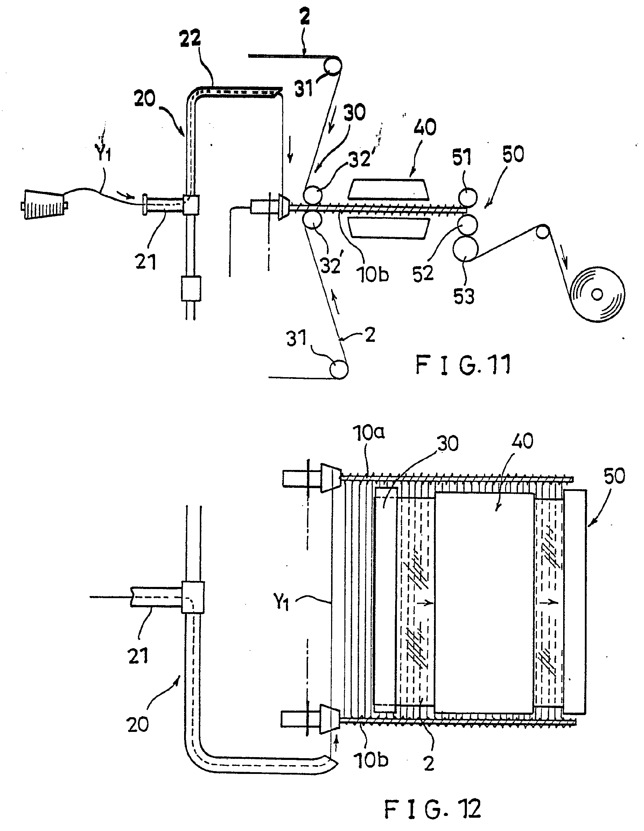

The non-woven fabric shown in Fig. 8 to Fig. 10 may be made by supplying the film-like members 2 instead of the warp yarns, with the use of apparatus shown in Fig. 11 and Fig. 12, which is similar to the non-woven fabric manufacturing apparatus shown in Fig. 3 and Fig. 4. The following description will discuss how to make such non-woven fabrics. However, since the arrangement of the apparatus in Fig. 11 and Fig. 12 is substantially the same as that of the apparatus shown in Fig. 3 and Fig. 4, the detailed description of the apparatus will be omitted.

The composite-layer yarn Y1 fed as the weft from a bobbin or the like is guided to the outside from the tip opening of a hollow guide arm 22 radially extending from a hollow shaft portion 21 of a laying device 20. By the rotation of the laying device 20, the yarn Y1 is wound on a pair of yarn supports 10a, 10b disposed at the right- and left-hand sides of the apparatus. Thus, the weft yarn portions are laid over and between the supports 10a, 10b at predetermined spatial intervals. The yarn supports 10a, 10b are extended in the yarn feeding direction, and have spiral guide structures. The yarn portions Y1 laid over and between the supports 10a, 10b are continuously fed, as supported substantially in parallel with one another, by the rotation of the supports 10a, 10b.

The film-like members 2 in place of the warp yarns are continuously supplied in the longitudinal direction thereof through guide rollers 31 from above and under the apparatus, as would be done with the warp yarns. By rollers 32' of an overlapping device 30, the film-like members 2 are fed and placed above and below the yarn portions Y1 fed as laid over and between the yarn supports 10a, 10b, in the direction that the yarn portions Y1 intersect the film-like members 2. In this connection, the rollers 32' need not to be warping grooved rollers as required for overlapping the warp yarns.

The yarn portions Y1 and the upper and lower film-like members 2 fed as overlapping one another are heated by a heating device 40. The heating device 40 is arranged such that the yarns and the films are heated to a temperature in a range higher than the melting point of the surface-layer resin B of the composite-layer yarn Y1 and lower than the melting point of the base-member resin A. Thus, the surface-layer resin B of the yarns portions Y1 is softened and molten, while the base-member resin A having a melting point higher than that of the surface-layer resin B is neither softened nor molten.

The yarn portions Y1 and the film-like members 2 heated to a temperature in the range above-mentioned are compressed, from above and under, by a compression device 50 having a plurality of rollers 51, 52, 53 disposed downstream of the heating device 40. Accordingly, the yarn portions Y1 and the film-like members 2 are bonded togather with the surface-layer resins B thereof softened and molten. Thus, the non-woven fabric above-mentioned is obtained.

For example, when the surface layers of the film-like members 2 are made of synthetic resin having a melting point higher than that of the base-layer resin A, the non-woven fabric as shown in Fig. 8 may be obtained. When the surface layers of the film-like members 2 are made of synthetic resin having a melting point substantially equal to that of the surface-layer resin B, the non-woven fabric as shown in Fig. 10 may be obtained.

When the yarn supports 10a, 10b are extended to the positions opposite to the compression device 50, the yarn portions Y1 serving as the weft yarns laid over and between the yarn supports 10a, 10b may be bonded to the film-like members 2 without causing the yarn portions Y1 to be loosened.

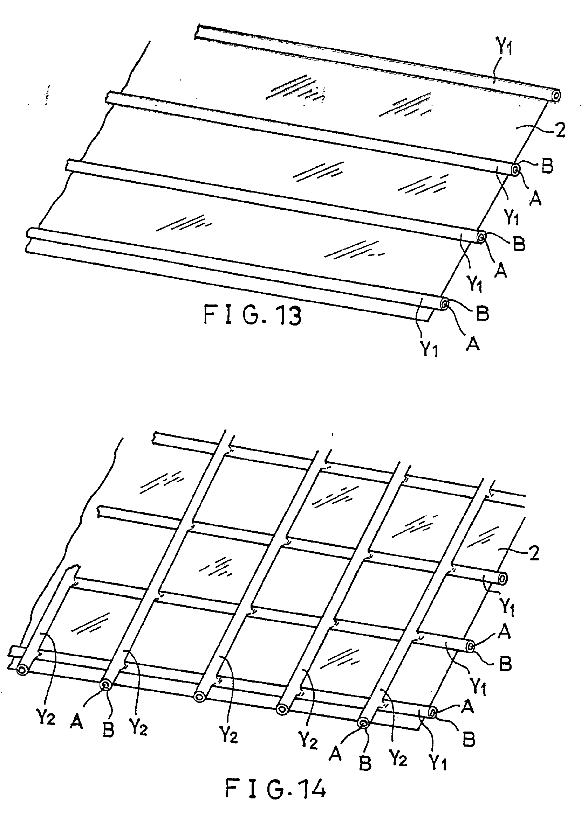

Fig. 13 shows a further example of the non-woven fabric as shown in Fig. 8. In this example, a film-like member 2 is disposed below yarn portions Y1 arranged substantially in parallel with one another, with an upper film-like member eliminated. The yarn portions Y1 and the film-like member 2 are bonded together.

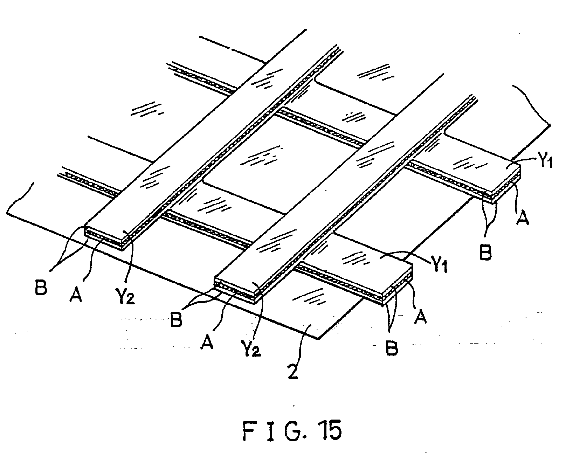

Fig. 14 and Fig. 15 show still another examples of the non-woven fabric as shown in Fig. 8. In these examples, yarns Y2 having a composite structure similar to that of yarn portions Y1 serving as the weft yarns are used as the warp yarns, instead of one of the upper and lower film-like members 2 mentioned earlier. With the yarns Y2 overlapping and intersecting the yarn portions Y1, the yarns and the film-like member are bonded together in the same manner as in the foregoing.

In particular, Fig. 15 shows an example using, as yarn portions Y1 serving as the weft yarns and yarns Y2 serving as the warp yarns, composite-layer tape-like yarns such as composite flat yarns or the like, each comprising a base layer made of synthetic resin A and surface layers made of synthetic resin B having a melting point lower than that of the base-layer resin A. The yarns Y2 are bonded, at the surface-layer resin B, to the yarn portions Y1 and the film-like member 2.

The non-woven fabric shown in Fig. 15 is reinforced by the weft and warp yarns Y1 and Y2, thus providing a great tensile strength in both transverse and longitudinal directions of the fabric. This prevents the film-like member 2 from being broken or damaged. This particularly enables a non-oriented film to be used as the film-like member 2.

The tape-like yarns mentioned earlier may also be used in the examples shown in Fig. 8 (Fig. 9), Fig. 10 and Fig. 13, independently or in combination with the composite mono-filament yarns.

In these examples, the diameters, widths, thicknesses and between-yarn distances of the yarns Y1 and Y2, and the thickness or the like of the film-like members 2 may be suitably set dependent on the application. Further, the yarns serving as the warp yarns may have partially different types and colors, and may be arranged with the between-yarn distance partially changed. Generally, there are preferably used the weft and warp yarns Y1 and Y2 of which denier is up to about 2,000 for the mono-filament yarns, or of which thickness is in a range from a few to hundreds microns for the tape-like yarns.

The synthetic resin A forming the composite-layer yarns Y1 and Y2 is thermoplastic resin, and examples thereof include high-density polyethylene, polypropylene, polyvinyl chloride, polystyrene, polyvinyl alcohol, polyacrylonitrile, polyvinylidene chloride, polyamide, polyester and a copolymer containing any one of the substances above-mentioned.

The synthetic resin B having a low melting point which forms the surface layers, is thermoplastic resin of which melting point is lower than that of the base-member resin A and which does not cause to lose the characteristics of the resin A, such as tensile strength, obtained by the orientation of the base-member resin A at a thermal compression temperature to be used.

Examples of the synthetic resin B include low-density polyethylene, an etylene-vinyl acetate copolymer, an ethylene-acrylic acid copolymer or the like.

As the synthetic resin film-like members 2, there may be used a variety of other film-like members made of synthetic resin, in addition to the uniaxially orientated synthetic film or the multi-layer film as described in the foregoing. Examples of the film-like members include (i) a porous film having a number of small bores, (ii) a net-like film obtained by embossing or extension after cutting with a cutter, or (iii) a net-like film obtained by contour extrusion.

[Industrial Utility Potential]

As discussed in the foregoing, the non-woven fabric in accordance with the the first embodiment of the present invention in which the weft and warp yarns are bonded together, is excellent in resistance to peeling strength since the weft and warp yarns are securely bonded together with the surface-layer resins thereof molten and bonded. Further, the base-member resin is neither softened and molten, nor lose the characteristics, such as tensile strength, inherent therein. Thus, the base-member resin holds its inherent characteristics even in the resultant non-woven fabric. Thus, the non-woven fabric may be satisfactorily used as a non-woven fabric of this type with excellent durability.

Accordingly, the non-woven fabric of the present invention may be used as a reinforcing layer for a variety of sheet-like articles such as paper, synthetic films or the like, or as a reinforcing member for construction materials. Further, the non-woven fabric of the present invention may be suitably used, independently, as net materials or in a variety of fields.

The non-woven fabric in accordance with the second embodiment of the present invention in which a film-like member(s) and yarns are combined, is excellent in resistance to peeling strength since the yarns serving as a reinforcing layer are bonded securely and rigidly to the film-like member(s) with the surface-layer resins thereof molten and bonded. Further, the base-member resin is neither softened and molten, nor lose the characteristics, such as tensile strength, inherent therein. Thus, the base-member resin holds its inherent characteristics even in the resultant non-woven fabric and assures a good reinforcement by the yarns. This prevents the film-like member from being stretched, broken or

0344318

damaged. Thus, the non-woven fabric may be satisfactorily used as a non-woven fabric of this type.

Accordingly, such non-woven fabric of the present invention may be used as a reinforcing layer for a variety of sheet-like articles such as paper, synthetic resin films or the like, or as a reinforcing member for construction materials. Further, such non-woven fabric of the present invention may also be used in an application which does not allow the use of net-like non-woven fabrics. Thus, such a non-woven fabric may be used in a wide range and in a variety of manners.

According to the non-woven fabric manufacturing apparatus of the present invention, the non-woven fabrics above-mentioned may be efficiently made without exerting bad influences upon the base-member resin of the yarns. In particular, a pair of yarn supports for supporting and feeding yarns serving as the weft yarns, hold the weft yarn portions until the thermal compression is complete. This prevents the weft yarn portions from being loosened before the yarns and the film(s)s are bonded together by thermal compression. Thus, there may be produced a non-woven fabric of high quality free from yarn distortion, yarn bowing or the like.

What is Claimed is:

1. A non-woven fabric including at least two layers in each of which a plurality of composite-layer yarns made of at least two types of synthetic resins having different melting points, are arranged, as weft or warp yarns, substantially in parallel with one another, the weft yarns intersecting the warp yarns,

each of said yarns includes a base member made of the synthetic resin having a higher melting point, and a surface layer made of the synthetic resin having a lower melting point,

said yarns being thermally compressed at a temperature in a range higher than the melting point of said surface-layer resin and lower than the melting point of said base-member resin such that said weft and warp yarns are bonded together at the intersecting points thereof.

2. A sheet-like non-woven fabric comprising:

(i) a plurality of composite-layer yarns made of at least two types of synthetic resins having different melting points,

each yarn including (a) a base member made of the synthetic resin having a higher melting point, and (b) a surface layer made of the synthetic resin having a lower melting point,

said yarns being arranged substantially in parallel with one another in one direction;

(ii) a film-like member made of synthetic resin disposed on at least one side of said yarns,

said yarns and said film-like member being thermally compressed at a temperature in a range higher than the melting point of said surface-layer resin of said yarns and lower than the melting point of said base-member resin of said yarns, such that said yarns and said film-like member are bonded together.

3. A non-woven fabric as set forth in Claim 1 or 2, wherein the composite-layer yarns are multi-layer tape-like yarns obtained by slitting a multi-layer film including (a) a base layer made of synthetic resin having a relatively high melting point and (b) a surface layer disposed on at least one side of said base layer and made of synthetic resin having a melting point lower than that of said base-layer resin.

4. A non-woven fabric as set forth in Claim 1 or 2, wherein the composite-layer yarns are composite mono-filament yarns, each of said yarns including a base

member made of synthetic resin having a relatively high melting point, said base member being coated on the surface thereof with synthetic resin having a melting point lower than the melting point of said synthetic resin forming said base member.

5. A non-woven fabric as set forth in Claim 1 or 2, wherein the multi-layer tape-like yarns are used as one yarns out of the weft and warp yarns, and the composite mono-filament yarns are used as the other yarns out of the weft and warp yarns.

6. A non-woven fabric as set forth in Claim 2, wherein the film-like member of synthetic resin is a uniaxially oriented film, which is disposed on the yarns such that the orientation direction of said film intersects said yarns.

7. A non-woven fabric as set forth in Claim 1 or 6, wherein the film-like member of synthetic resin is a uniaxially oriented multi-layer film including (a) a base layer made of synthetic resin having a relatively high melting point and (b) a surface layer disposed on at least one side of said base layer and made of synthetic resin having a melting point higher than that of

said base-layer resin,

said film-like member and the yarns being meltingly bonded together with said surface layer of said film-like member being opposite to said yarns.

8.   An apparatus for manufacturing a non-woven fabric comprising:

a pair of yarn supports disposed at both sides of said apparatus with a distance provided therebetween for supporting and continuously feeding a yarn as laid over and between said yarn supports such that the yarn portions laid therebetween are substantially parallel with one another,  said yarn having a composite layer structure including a base member made of synthetic resin having a relatively high melting point and a surface layer made of synthetic resin having a low melting point;

a laying device for continuously feeding said yarn, as the weft,  to said yarn supports such that the yarn portions are laid over and between said yarn supports;

an overlapping device for continuously supplying yarns having said composite layer structure as warp yarns,  or a film-like member(s) made of synthetic resin in place of said warp yarns,  above and/or below said weft yarn portions laid over and between said yarn supports, said warp yarns or said film-like member(s) intersecting the weft direction;

a heating device for heating said weft yarn portions and said warp yarns or said film-like member(s) in lamination to a temperature in a range higher than the melting point of the surface-layer resin of said yarns and lower than the melting point of the base-member resin of said yarns; and

a compression device for compressing said weft yarn portions and said warp yarns or said film-like member(s) as heated, from above and under, such that said weft yarn portions and said warp yarns or said film-like member(s) are bonded together, ,

said yarn supports being extended to the positions opposite to said heating device and said compression device.

F I G. 1

F I G. 2

F I G. 3

F I G. 4

0344318

FIG.5

FIG.6

FIG. 7

FIG. 8

FIG. 9

FIG. 10

F I G. 11

F I G. 12

FIG. 13

FIG. 14

F I G. 15

International Application No PCT/JP88/00950

| I. CLASSIFICATION OF SUBJECT MATTER (if several classification symbols apply, indicate all) [6] |
|---|

According to International Patent Classification (IPC) or to both National Classification and IPC

Int.Cl[4]   D04H3/14, D04H3/04, B32B5/08,
            B32B27/04

| II. FIELDS SEARCHED |
|---|

| Minimum Documentation Searched [7] | |
|---|---|
| Classification System | Classification Symbols |
| IPC | D04H3/14, D04H3/04, B32B5/08, B32B27/04 |

| Documentation Searched other than Minimum Documentation to the Extent that such Documents are Included in the Fields Searched [8] | |
|---|---|
| Jitsuyo Shinan Koho | 1926 – 1988 |
| Kokai Jitsuyo Shinan Koho | 1971 – 1988 |

| III. DOCUMENTS CONSIDERED TO BE RELEVANT [9] | | |
|---|---|---|
| Category [*] | Citation of Document, [11] with indication, where appropriate, of the relevant passages [12] | Relevant to Claim No. [13] |
| X | JP, A, 61-282467 (Kitamura Atsushi) 12 December 1986 (12. 12. 86) (Family: none) | 1, 4 |
| X | JP, U, 60-56787 (Daiwa Spinning Co., Ltd.) 20 April 1985 (20. 04. 85) (Family: none) | 1, 4 |
| X | JP, A, 55-67053 (Asahi Chemical Industry Co., Ltd.) 20 May 1980 (20. 05. 80) (Family: none) | 1, 4 |
| X | JP, U, 52-101875 (Nippon Petrochemicals Co., Ltd.) 2 August 1977 (02. 08. 77) (Family: none) | 1, 3 |
| X | JP, A, 51-42783 (Sanyo-Kokusaku Pulp Co., Ltd.) 12 April 1976 (12. 04. 76) (Family: none) | 1, 3 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

| IV. CERTIFICATION | |
|---|---|
| Date of the Actual Completion of the International Search | Date of Mailing of this International Search Report |
| September 28, 1988 (28. 09. 88) | October 11, 1988 (11. 10. 88) |
| International Searching Authority | Signature of Authorized Officer |
| Japanese Patent Office | |

Form PCT/ISA/210 (second sheet) (January 1985)

| FURTHER INFORMATION CONTINUED FROM THE SECOND SHEET | | |
|---|---|---|
| Y | JP, A, 51-10883 (Sanyo-Kokusaku Pulp Co., Ltd.)<br>28 January 1976 (28. 01. 76)<br>(Family: none) | 2, 3, 6, 7 |
| Y | JP, A, 61-282467 (Kitamura Atsushi)<br>12 December 1986 (12. 12. 86)<br>(Family: none) | 5 |
| Y | JP, U, 60-56787 (Daiwa Spinning Co., Ltd.)<br>20 April 1985 (20. 04. 85)<br>(Family: none) | 5 |
| Y | JP, A, 55-67053 (Asahi Chemical Industry | 5 |

**V.☐ OBSERVATIONS WHERE CERTAIN CLAIMS WERE FOUND UNSEARCHABLE**[10]

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING**[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)

| FURTHER INFORMATION CONTINUED FROM THE SECOND SHEET | | |
|---|---|---|
| | 22 October 1983 (22. 10. 83) (Family: none) | |
| Y | JP, A, 58-180659 (Kurabo Industries Ltd.) 22 October 1983 (22. 10. 83) (Family: none) | 8 |
| Y | JP, A, 60-166443 (Sekisui Jushi Co., Ltd.) 29 August 1985 (29. 08. 85) (Family: none) | 8 |
| Y | JP, U, 53-144981 (Takeda Myer Kabushiki Kaisha) 15 November 1978 (15. 11. 78) (Family: none) | 8 |

## V.☐ OBSERVATIONS WHERE CERTAIN CLAIMS WERE FOUND UNSEARCHABLE [10]

This international search report has not been established in respect of certain claims under Article 17(2) (a) for the following reasons:

1.☐ Claim numbers _____, because they relate to subject matter [12] not required to be searched by this Authority, namely:

2.☐ Claim numbers _____, because they relate to parts of the international application that do not comply with the prescribed requirements to such an extent that no meaningful international search can be carried out [13], specifically:

## VI.☐ OBSERVATIONS WHERE UNITY OF INVENTION IS LACKING [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

| FURTHER INFORMATION CONTINUED FROM THE SECOND SHEET | |
|---|---|
| Co., Ltd.)<br>20 May 1980 (20. 05. 80)<br>(Family: none) | |
| Y    JP, U, 52-101875 (Nippon Petrochemicals Co., Ltd.)<br>2 August 1977 (02. 08. 77) (Family: none) | 5 |
| Y    JP, A, 58-180657 (Kurabo Industries Ltd.)<br>22 October 1983 (22. 10. 83)<br>(Family: none) | 8 |
| Y    JP, A, 58-180658 (Kurabo Industries Ltd.) | 8 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.